# EUROPÄISCHE PATENTANMELDUNG

(11) **EP 3 623 651 A1**
(43) Veröffentlichungstag der Anmeldung: **18.03.2020**
(21) Anmeldenummer: 18194072.7
(22) Anmeldetag: 12.09.2018
(51) Int. Cl.: F16C 3/08

(54) **LAGER MIT LAGERZAPFEN ZUR VERWENDUNG IN MOTOREN UND ANDEREN VORRICHTUNGEN**

(71) Anmelder: Winterthur Gas & Diesel AG, 8401 Winterthur (CH)
(72) Erfinder: Züger, Reto, 8902 Urdorf (CH)
(74) Vertreter: Intellectual Property Services GmbH

(57) **Zusammenfassung**

Lager umfassend eine Lagerschale (2) und einen Lagerzapfen (1, 11, 12) mit einer Rotationsachse (X), wobei der Lagerzapfen (1, 11, 12) um die Rotationsachse (X) rotierbar in der Lagerschale (2) angeordnet ist. Der Lagerzapfen (1, 11, 12) ist besitz derart eine asymmetrische Schwächung (3) in Bezug auf seine Rotationsachse (X), dass der Lagerzapfen (1, 11, 12) durch Einwirkung einer in Richtung der Lagerschale (2) wirkenden äusseren Kraft (F) deformierbar ist, sodass eine effektive Kraftfläche zwischen der Lagerschale (2) und dem Lagerzapfen (1, 11, 12) über die Deformation des Lagerzapfens (1, 11, 12) vergrösserbar ist.

## Beschreibung

Die Erfindung betrifft ein Lager mit einer Lagerschale und einem Lagerzapfen gemäss dem Oberbegriff des unabhängigen Anspruchs. Weiter betrifft die Erfindung einen Lagerzapfen für ein Lager nach einem der Ansprüche 1-12 gemäss dem Oberbegriff des unabhängigen Anspruchs 13, einen Kreuzkopf umfassend ein Lager nach einem der Ansprüche 1-12 gemäss dem Oberbegriff des unabhängigen Anspruchs 14 und einen Grossmotor umfassend ein Lager nach einem der Ansprüche 1-12 gemäss dem Oberbegriff des unabhängigen Anspruchs 15.

Im Stand der Technik sind viele verschiedene Arten von Lagern bekannt. Bei Motoren und Kreiselpumpen werden hierbei häufig Gleitlager verwendet, bei denen ein bewegtes in einem feststehenden Teil gleitet.

Die diversen Lager in Verbrennungsmotoren oder anderen Vorrichtungen haben die Aufgabe, rotierende oder oszillierende Bauteile zu fixieren oder auf einer vorgegebenen Bahn zu führen. Lagerungen dienen der Aufnahme und Weiterleitung von Kräften zwischen sich relativ zueinander bewegenden Bauteilen. Zur Verminderung der mechanischen Verluste und zur Gewährleistung einer langen Lebensdauer sind für alle umlaufenden Dreh-, Linear- (Gleit-) und Schwenkbewegungen Lager erforderlich. Die Lager nehmen unter anderem die senkrecht zur Drehachse wirkenden Radialkräfte und/oder die in Richtung der Drehachse wirkenden Axialkräfte auf und übertragen diese auf weitere sich drehende oder ruhende Bauteile. In heutigen Verbrennungsmotoren kommen hierbei unter anderem Gleit-, als auch Wälzlager zum Einsatz.

Weil die Vorteile der Gleitlager überwiegen, werden in den Kurbeltrieben (bis jetzt) fast ausschließlich Gleitlager eingesetzt. Um die Reibungsverluste zu verringern, werden aber überall dort Wälzlager verwendet, wo die Belastungen und Einbaubedingungen es zulassen.

Bei Verbrennungsmotor-Gleitlagern wird ein hydrodynamischer Schmierungszustand angestrebt, bei dem die Welle und das Lager durch einen tragfähigen Schmierfilm voneinander getrennt sind und metallische Kontakte weitgehend vermieden werden. Die Flüssigkeitsreibung gewährleistet geringe Reibungsverluste und lange Lebensdauer durch weitgehende Verschleissfreiheit. Die Drehbewegung einer Welle im Lager bewirkt in einem viskosen Medium eine Strömung, da der Schmierstoff an den Oberflächen der Gleitpartner haftet. Verengt sich in Bewegungsrichtung der keilförmige Schmierspalt zwischen der Lageroberfläche und dem exzentrischen Zapfen, entsteht ein hydrodynamischer Druck im Schmierfilm, weil infolge der Zähigkeit des Schmierstoffes das seitliche Abströmen behindert ist. Dieser Druck versucht die den Schmierfilm begrenzenden Oberflächen auseinander zu drängen und erzeugt dadurch eine Tragkraft, die der äußeren Lagerkraft das Gleichgewicht hält (Keildruck).

Lagerschalen können hierbei als Halbschalen oder Lagerbuchsen ausgestaltet sein. Welche Art verwendet wird, hängt von konstruktiven Gesichtspunkten ab. Sie richten sich in erster Linie nach der Gestaltung des Lagerstuhles und der Welle.

Im Stand der Technik sind dünnwandige Lagerschalen (dünnwandige Lagerschalen: Dicke/DurchmesserVerhältnis > 0,05) bekannt, welche mit einer Vorspannung eingebaut werden, um eine gute Anlage der Schale im Gehäuse zu gewährleisten. Damit hat man auch eine gute Sicherung gegen Verdrehung im Betrieb. Um die notwendige Pressung zu gewährleisten werden Spreizung und Überstand angewandt.

Die Vielfalt der möglichen Lagerformvarianten hängt mit der Beherrschung des dynamischen Verhaltens der Kräfte zusammen, welche auf das Lager einwirken. Insbesondere das Schwingungsverhalten gleitgelagerter Vorrichtungen ist im Wesentlichen von der Masse des Rotors, der Massenverteilung, der Biegesteifigkeit der Welle sowie von den Federungs- und Dämpfungseigenschaften der Lagerung unter gegebenem Lastfall abhängig. Durch eine geeignete Gestaltung der Lagerung können Querschwingungen (zwangs- und selbsterregte Schwingung) verhindert oder optimiert werden. Die Wahl der Lagerform und Ausgestaltung des Lagers stellt einen wesentlichen Bestandteil der Optimierung dar, weil unterschiedliche Lagerformen und Lagerausgestaltungen auch unterschiedliche Eigenschaften aufweisen.

Durch geeignete Fertigungsmaße der bewegten und feststehenden Funktionsteile und deren gegenseitige Einstellung entsteht ein Lagerspiel, das meist mit einem flüssigen oder konsistenten (fettartigen) Schmierstoff zur Vermeidung von gleitender Reibung versorgt wird. Durch dieses Lagerspiel kann sich in dem vorhandenen Raum bei genügender Umfangsgeschwindigkeit des Lagerzapfens ein tragender Schmierkeil aus dem Schmierstoff formen. Der Schmierkeil trennt die aufeinander gleitenden Teile, sodass das Lager mit Vollschmierung arbeitet. Dieser Vorgang ist typisch für hydrodynamische Gleitlager.

Um die Lager im Betrieb mit ausreichend Schmiermittel zu versorgen, sind oft Schmierstoffzuführungselemente notwendig, welche kontinuierlich und nach Bedarf Schmiermittel wie Schmieröl zuführen, um die Gleitschicht im Lager aufrecht zu erhalten.

Beispielsweise im kleinen Pleuelauge, im Kolbenbolzenauge, für die Lagerung von Nockenwellen, Kipphebeln, Schlepphebeln, Zahnrad und Ölpumpen- sowie Wasserpumpenwellen werden meistens dünnwandige Mehrstoffbuchsen (Verbundwerkstoff) verwendet. Solche Buchsen können gerollt mit Stoßfuge oder im Schleudergussverfahren in einem Stahlrohr gefertigt werden.

Ein Zapfen ist ein (oft zylindrischer oder quaderförmiger) Fortsatz eines Bauteils, der dazu dient, dieses mit einem anderen Bauteil zu verbinden. Beim Radial-Gleitlager ist der bewegte Teil häufig der Zapfen der Achse oder Welle, der feststehende Teil ist typischerweise die Lagerschale.

Die Lagerung soll einerseits die Rotation der Welle ermöglichen und gleichzeitig die Axialkräfte mit möglichst geringer Verformung in die Umgebungskonstruktion ableiten. Bei modernen Getrieben sind axiale Tragfähigkeiten und Steifigkeit sehr hoch, so dass nur hochwertige und optimierte Lager den Anforderungen gerecht werden. Gleichzeitig ist wegen den Axial- und Vorspannkräfte dieser Lager eine adäquate Befestigung von ausschlaggebender Bedeutung.

Die einfachste und kostengünstigste Möglichkeit besteht in einem Lagerzapfen, der ausreichend klein ist gegenüber dem Nenndurchmesser der Lagerschale. Im Idealfall ist die Fläche der Lagerschale bereits ausreichend, um die Kräfte des Lagers mit vertretbarer Flächenbelastung aufzunehmen.

Ein Zapfen bezeichnet im Maschinenbau ein abgesetztes Ende einer Achse, das ein Lager aufnehmen kann und als Zentrum einer Drehbewegung dient. Solche Zapfen werden oft durch Abdrehen der rohen Achse hergestellt und sind in ihren Abmessungen weitestgehend genormt. Am Ende einer Welle nimmt dagegen der Zapfen kein Lager auf, sondern kann eine Welle-Nabe-Verbindung wie beispielsweise eine Passfeder aufnehmen. Die dazu notwendige Nut wird in den zuvor abgedrehten Zapfen eingefräst; die Länge, Breite und Tiefe der Nut sind ebenso wie der zugehörige Zapfen genormt.

Ein Kurbelzapfen befindet sich außerhalb der Mitte einer Achse. Er nimmt ein Pleuel oder eine Treibstange auf und gewährleistet so den Kurbeltrieb. Bei Lokomotiven werden damit auch Kuppelstangen mit den entsprechenden beiden Radsätzen verbunden.

Bei Motoren mit einem Kreuzkopf nimmt der Kreuzkopf die senkrecht und seitlich auf die Kurbelwelle (Kurbelzapfen) wirkenden Kräfte auf. Er hält den Kolben von Seitenkräften frei. Dadurch kann der Kolben sehr flach ausgeführt werden (Scheibenkolben) und die heissen Zylinder- und Kolbenlaufflächen werden weniger beansprucht. Bei Tauchkolbenmaschinen übernimmt das Kolbenhemd die Rolle des Kreuzkopfes und überträgt Seitenkräfte auf den Zylinder.

Die Kinematik eines Kurbeltriebes mit Kreuzkopf stimmt mit der eines Kurbeltriebes ohne Kreuzkopf im Wesentlichen überein.

Der Kreuzkopf wird vor allem bei Hubkolben-Verbrennungsmotoren, insbesondere bei Zweitakt-Großdieselmotoren und Kolbendampfmaschinen eingesetzt.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfassst entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt. Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Der Kreuzkopf ist ein Maschinenelement, das bei Kurbeltrieben verwendet wird. Es koppelt die translatorisch oszillierende Kolbenstange mit dem translatorisch und rotatorisch bewegten Pleuel und findet sich überwiegend an großen Kolbenmaschinen. Die Achsen der Kolbenstange und des Pleuelbolzens kreuzen sich auf der gleichen Ebene. Der Kreuzkopf besitzt ein separates Gleitlager und ist starr mit der Kolbenstange und mit dem Kolben verbunden. Der Pleuel pendelt um den Kreuzkopf und ist mit einer Kurbelwelle verbunden.

Das Pleuel oder die Pleuelstange stellt somit die Verbindung - und somit den Kraftschluss - zwischen Kolben und Kurbelwelle her. Es setzt die lineare Auf- und Ab-Bewegung des Kolbens in die kreisförmige Bewegung der Kurbelwelle um und wird dementsprechend auf Zug, Druck, Biegung und Knickung beansprucht. Die Pleuelstange ist meist auf dem Kurbelzapfen der Kurbelwelle mit einem Gleitlager gelagert. Der Pleuellagerdeckel wird am Pleuelfuß mit Dehnschrauben befestigt. Das Pleuel ist in den meisten Fällen hohlgebohrt oder mit einem eingegossenen Ölkanal ausgeführt, um den Kolbenbolzen mit Schmiermittel zu versorgen.

Damit die Pleuelstange sowohl ein geringes Gewicht als auch eine hohe Festigkeit aufweist, wird sie meist aus folgenden Werkstoffen hergestellt: • mikrolegierte Stähle, Sintermetalle, hochwertiges Aluminium, CFK und Titan (bei Hochleistungsmotoren). Großserienpleuel werden geschmiedet, gegossen oder gesintert. Schmiedepleuel weisen gegenüber Sinterpleueln ein besseres Verhältnis von Festigkeit zu Gewicht bei niedrigeren Kosten auf. Jedoch ist die Gesenk-Herstellung vergleichsweise teuer.

Typischerweise werden Kurbelwellen-Lagerzapfen am zylinderseitigen Teil des Kurbelgehäuses an Lagerstegen ausgebildeten Lagerhalbschalen positioniert. Anschließend werden auf die Lagerhalbschalen jeweils Lagerdeckel angebracht aufgeschraubt oder ähnliches, die vorzugsweise an einem Zwischendeckel, einem sogenannten bed plate, ausgebildet sind. Der zweite Teil des Kurbelgehäuses bzw. der Kurbelgehäusedeckel wir hierbei auf den zylinderseitigen Teil aufgesetzt und damit verschraubt, daran angebracht oder ähnliches, wodurch die Lagerschalen festgesetzt werden.

Es sei erwähnt, dass auch zweigeteilte Lagerschalen möglich sind. Bei diesen wird die eine Hälfte vor der Kurbelwellenmontage im Kurbelgehäuse entsprechend positioniert und befestigt und nach dem Einlegen der Kurbelwelle der zweite Teil zusammen mit den Lagerdeckeln angebracht.

Am Hubkolben ist hierbei typsicherweise die Pleuelstange angelenkt, die über ein Pleuelstangenlager mit der Kurbelwelle verbunden ist. Die Kurbelwelle kann auch zwei Kurbelwellen-Lagerzapfen (Kurbelzapfen) aufweisen und einen im radialen Abstand von deren Drehachse ausgebildeten Pleuel-Lagerzapfen, an welchem die Pleuelstange angeordnet ist. Der Pleuel-Lagerzapfen ist normalerweise zwischen zwei Kurbelwellen-Wangen angeordnet, die mit den Kurbelwellen-Lagerzapfen verbunden sind und jeweils eine Schwungmasse aufweisen.

Die Nachteile der im Stand der Technik bekannten Lager liegen unter anderem in der Reibungsproblematik. Zwar wird bei den Lagern meist ein hydrodynamischer Schmierungszustand angestrebt, bei dem eine Trennung der Bauteile durch einen tragfähigen Schmierfilm vorliegt und metallische Kontakte weitgehend vermieden werden, wirkt jedoch eine in Richtung der Lagerschale wirkende äussere Kraft auf das Lager, entsteht eine effektive Kraftfläche zwischen den Bauteilen des Lagers (also zwischen Lagerschale und Lagerzapfen). Diese effektive Kraftfläche kann sehr klein sein (aufgrund der Geometrie von Lagerschale und des Lagerzapfens), wodurch auf dieser kleinen-effektiven Kraftfläche beziehungsweise Kontaktflächen ein sehr hoher Druck mit enormen Reibungseffekten entsteht. Ausserdem ist auch die begrenzte Tragfähigkeit der im Stand der Technik bekannten Lager ein grosser Nachteil. Solange ein (hydrodynamisches) Lager richtig belastet ist, wird die Lagerschale von einem Ölfilm/Schmierfilm geschützt, ohne dass es zu Mischreibung kommt. Dabei kann das Lagermaterial (beispielsweise Weissmetall) die Drücke, die vom Öl/Schmiermittel übertragen werden, sicher aufnehmen. Wenn die Belastung jedoch zunimmt, steigt der Öldruck/Schmiermitteldruck insgesamt an, und das Lagermaterial kommt irgendwann an seine Festigkeitsgrenzen. Gleichzeitig (beziehungsweise etwas früher oder etwas später) wird es zu Mischreibung (Reibung welche zwischen zwei aufeinander gleitenden Flächen entsteht, wenn keine ausreichende Schmierung vorhanden ist) kommen, was dann zu weiteren, grösseren Schädigungen führen kann.

Die Reibungseffekte haben eine starke Abnutzung zur Folge und können unter anderem zum Defekt einer ganzen Vorrichtung (z.B. Motor usw. führen, wobei aufwendige Reparaturen notwendig sind um die Lager auszuwechseln. Dadurch entstehen nicht nur unnötige Kosten, sondern selbstverständlich wird auch die Umwelt stark belastet.

Aufgabe der Erfindung ist es daher die aus dem Stand der Technik bekannten nachteiligen Wirkungen vermeiden. Insbesondere ist es die Aufgabe der Erfindung ein kostengünstiges Lager bereitzustellen, welches sowohl konstruktiv einfach ausgestaltet, als auch einen besseren und verschleissärmeren Lagerbetrieb ermöglicht. Somit soll ein Lager bereitgestellt werden, was zusätzlich eine verlängerte Lebensdauer, gegenüber der im Stand der Technik bekannten Lager aufweist.

Die Aufgabe wird durch ein Lager mit einer Lagerschale und einem Lagerzapfen gemäss dem Oberbegriff des unabhängigen Anspruchs 1, ein Lagerzapfen für ein Lager nach einem der Ansprüche 1-12 gemäss dem Oberbegriff des unabhängigen Anspruchs 13, einen Kreuzkopf umfassend ein Lager nach einem der Ansprüche 1-12 gemäss dem Oberbegriff des unabhängigen Anspruchs 14 und einen Grossdieselmotor umfassend ein Lager nach einem der Ansprüche 1-12 gemäss dem Oberbegriff des unabhängigen Anspruchs 15 gelöst.

Erfindungsgemäss wird ein Lager umfassend eine Lagerschale und einen Lagerzapfen mit einer Rotationsachse vorgeschlagen, wobei der Lagerzapfen um die Rotationsachse rotierbar in der Lagerschale angeordnet ist. Der Lagerzapfen des erfindungsgemässen Lagers umfasst derart eine asymmetrische Schwächung in Bezug auf die Rotationsachse, dass der Lagerzapfen durch Einwirkung einer in Richtung der Lagerschale wirkenden äusseren Kraft deformierbar ist, sodass beim Einwirken der Kraft auf den Lagerzapfen eine effektive Kraftfläche zwischen der Lagerschale und dem Lagerzapfen über die Deformation des Lagerzapfens vergrössert wird. Durch Vergrösserung der effektiven Kraftfläche kann ein Öldruck/Schmiermitteldruck im Lager, insbesondere eine maximaler Öldruck/Schmiermitteldruck im Lager verringert werden, da eine Kontaktfläche (insbesondere effektive Kraftfläche) zwischen Lagerschale und Lagerzapfen vergrössert wird und somit eine zwischen Lagerschale und Lagerzapfen wirkende Kraft besser verteilt wird.

Im Rahmen der Erfindung ist unter der effektiven Kraftfläche zwischen der Lagerschale und dem Lagerzapfen die Fläche zu verstehen, auf welcher bei Einwirkung einer äusseren Kraft auf das Lager, ein Druck beziehungsweise eine Kraft vom Lagerzapfen auf die Lagerschale übertragen wird. Hierbei kann der Druck, insbesondere ein in Bezug auf in eine spezielle Anwendung und/oder auf eine einwirkende Kraft optimaler Schmiermitteldruck, zwischen Lagerzapfen und Lagerschale, derart verringert werden, dass an einem bestimmen Teil zwischen Lager und Lagerschale kein optimaler Schmierungszustand (in Bezug auf in eine spezielle Anwendung und/oder auf eine einwirkende Kraft) mehr vorliegt. Im speziellen kann der optimale Schmiermitteldruck auch ein hydrodynamischer Schmiermitteldruck sein, wobei durch Verringerung des Drucks zwischen Lagerzapfen und Lagerschale kein hydrodynamischer Schmierungszustand, mehr vorliegt. Dieser bestimmte Teil an welchem zwischen Lager und Lagerschale kein auf Anwendung und einwirkende Kraft bezogener optimaler Schmierungszustand mehr vorliegt, ist die effektive Kraftfläche, an welcher der grösste Teil der in Richtung der Lagerschale wirkenden äusseren Kraft zwischen Lagerzapfen und Lagerschale übertragen wird. In den Lagern des Standes der Technik wird hierbei die Schmiermittelschicht so verringert (beziehungsweise verschwindet ganz), dass kein optimaler, also ein zu dünner (oder kein) Schmiermittelfilm an der effektiven Kraftfläche und zwischen Lager und Lagerschale zurückbleibt, wodurch starke Reibungseffekte und eine entsprechende Abnutzung auftreten. An der effektiven Kraftfläche liegt also nur noch eine minimale Schmiermittelschicht vor, in welcher insbesondere auch kein hydrodynamischer Schmierungszustand mehr vorliegt. Die effektive Kraftfläche kann auch einer unmittelbaren Kontaktfläche zwischen Lagerzapfen und Lagerschale entsprechen, was im gängigen Lagerbetrieb jedoch meist nur bei speziellen Belastungszuständen vorkommt. Wie vorrangehend bereits erwähnt wird der Lagerzapfen durch Einwirkung der in Richtung der Lagerschale wirkenden äusseren Kraft deformiert. Hierbei wird der Lagerzapfen deformiert durch den Druck an der effektiven Kraftfläche zwischen Lagerzapfen und Lagerschale, sodass sich die effektive Kraftfläche zwischen Lagerzapfen und Lagerschale durch den Deformationsvorgang des Lagerzapfens vergrössert. Durch diese erfindungsgemässe deformationsbedingte Vergrösserung der effektiven Kraftfläche zwischen Lagerzapfen und Lagerschale wird auch eine grössere (im Vergleich ohne erfindungsgemässe Deformation) somit eine auf Anwendung und einwirkende Kraft bezogener optimale Schmiermitteldicke, insbesondere minimal notwendige Schmiermitteldicke (insbesondere ohne hydrodynamischen Schmierungszustand), ermöglicht und somit die Reibung zwischen Lagerzapfen und Lagerschale bei Einwirkung der äusseren in Richtung der Lagerschale wirkenden Kraft erniedrigt. Beim Stand der Technik hingegen ist die effektive Kraftfläche sehr klein und somit auch die entsprechende Reibung durch zu geringe Schmiermittelschichtdicke sehr hoch, was die zu vermeidende starke Abnutzung zur Folge hat.

Wirkt beim erfindungsgemässen Lager eine in Richtung der Lagerschale wirkende äussere Kraft auf den Lagerzapfen, so entsteht wie auch beim aus dem Stand der Technik bekannten Lagern eine effektive Kraftfläche zwischen Lagerzapfen und Lagerschale. Das kann heissen, dass sich die Oberflächen der Lagerschale und des Lagerzapfens berühren, ohne dass ein (ausreichender) Schmierfilm die Lagerschale und den Lagerzapfen trennt.

Der erfindungsgemässe Lagerzapfen umfasst jedoch eine asymmetrische Schwächung in Bezug auf die Rotationsachse. Die asymmetrische Schwächung des Lagerzapfens ist also nicht symmetrisch um die Rotationsachse angeordnet. Erläutert man die asymmetrische Schwächung am Beispiel eines kreiszylindrischen Lagerzapfens so könnte die asymmetrische Schwächung eine kreisförmige Querschnittsfläche aufweisen, wobei der Mittelpunkt der kreisförmigen Querschnittsfläche dieser asymmetrischen Schwächung nicht auf der Rotationsachse liegen würde. Bei einer symmetrischen Schwächung hingegen liegt der Mittelpunkt der kreisförmigen Querschnittsfläche dieser symmetrischen Schwächung auf der Rotationsachse.

Durch diese asymmetrische Schwächung ist der Lagerzapfen durch Einwirkung einer in Richtung der Lagerschale wirkenden äusseren Kraft deformierbar. Somit wird die effektive Kraftfläche zwischen Lagerschale und Lagerzapfen vergrössert, da beim Einwirken der Kraft auf den Lagerzapfen, der Lagerzapfen derart durch den Druck, welcher zwischen der Lagerschale und dem Lagerzapfen entsteht, in Richtung der Lagerschale deformiert wird. Insbesondere wird der Lagerzapfen asymmetrisch deformiert, da die Schwächung des Lagerzapfens vorzugsweise auf der Seite des Lagerzapfens zentriert ist, auf welche der Druck durch die in Richtung der Lagerschale wirkenden äusseren Kraft, auf eine Oberfläche des Zapfens direkt einwirkt. Es wird die spezifische Belastung verringert, indem die Kontaktfläche zwischen Lagerzapfen und Lagerschale vergrössert wird, da die Auflagefläche des Lagerzapfens vergrössert wird.

Der Lagerzapfen deformiert sich somit in Abhängigkeit von der Ausführung der asymmetrischen Schwächung. Die asymmetrische Schwächung des Lagerzapfens wird dementsprechend auf die Richtung und den Auftrittspunkt der in Richtung der Lagerschale wirkenden äusseren Kraft angepasst. Die Art, Grösse, Form der asymmetrischen Schwächung wird somit in Abhängigkeit von der Anwendung und den einwirkenden Kräften ausgestaltet.

Die Vorteile der erfindungsgemässen Vorrichtungen sind unter anderem, dass durch die vergrösserte Kraftfläche der Druck und somit auch die Reibung verringert wird. Dadurch wird die Abnutzung des Lagers verringert, weswegen das erfindungsgemässe Lager deutlich effizienter und kostengünstiger ist als die aus dem Stand der Technik bekannten Lagervorrichtungen und Vorrichtungen mit Lagern. Durch die Vergrösserung der effektiven Kraftfläche wird also der Flächendruck besser verteilt und somit wird die selbe Kraft auf eine grössere Fläche verteilt. Dadurch ist auch eine bessere Schmierung, also erfindungsgemäss eine bessere optimale Schmierung des Lagers gewährleistet, wodurch die Lebenszeit des Lagers verlängert wird. Bei einer Verschmutzung des Lagers durch Verschmutzungspartikel kann es insbesondere bei geringer Schmierfilmdicke zu Beschädigungen kommen, wenn die Verschmutzungspartikel grösser sind als die Dicke des Schmierfilms. Durch die bessere Verteilung des Flächendrucks wird jedoch eine grössere Schmierfilmdicke ermöglicht und somit auch eine eventuelle Beschädigung des Lagers durch Schmutzpartikel vorgebeugt.

Wie vorrangehend beschrieben, kann der erfindungsgemässe Lagerzapfen als ein zylindrischer Lagerzapfen ausgestaltet sein. Bei einem zylindrischen Lagerzapfen würde die Rotationsachse vorzugsweise der n-rotationssymmetrischen Symmetrieachse des zylindrischen Lagerzapfens entsprechen (also der Rotationsachse um welche der Zylinder rotationsymmetrisch ist unabhängig vom gedrehten Winkel), wobei die asymmetrische Schwächung asymmetrisch in Bezug auf die n-rotationssymmetrische Symmetrieachse des zylindrischen Lagerzapfens angeordnet wäre. So könnte der zylindrische Lagerzapfen als eine Art Hohlzylinder ausgestaltet sein, welcher einen Hohlraum umfasst der nicht Zentral in der Mitte (in Bezug auf eine runde Grundfläche beziehungsweise Querschnittsfläche) des zylindrischen Lagerzapfens angeordnet ist.

Wie vorrangehend beschrieben, kann je nach Ausgestaltung des Lagers die Rotationsachse des Lagerzapfens der Symmetrieachse des Lagerzapfens entsprechen, sodass der Lagerzapfen rotationssymmetrisch rotierbar um die Symmetrieachse in der Lagerschale angeordnet ist.

Der Lagerzapfen muss jedoch kein symmetrischer Körper sein. Der Lagerzapfen kann unter anderem als n-eckiger Körper mit abgerundeten Ecken und Kanten ausgestaltet sein. Auch ist es möglich, dass der Lagerzapfen als Kugel oder ein Ellipsoid ausgestaltet ist. Ein Ellipsoid hat unter anderem den Vorteil, dass der Ellipsoid bereits im wenig belasteten Zustand verformt ist und somit die effektive Kraftfläche zwischen dem Lagerzapfen und der Lagerschale vergrössert wird. Der Lagerzapfen kann bereits vorher als Ellipsoid ausgestaltet sein, um eine Notwendigkeit einer zu stark ausgeführten (zu ausgeprägte) asymmetrischen Schwächung zu vermeiden und eine ähnlichen Vergösserungseffekt der effektiven Kraftfläche zwischen dem Lagerzapfen und der Lagerschale zu errreichen, ohne dabei den Lagerzapfen derart zu schwächen, dass er bei zu starker Krafteinwirkung zerstört wird, indem er z.B: bricht. Hierbei sollte die Lagerschale jedoch vorzugsweise eine, an das Ellipsoid angepasste, Krümmung aufweisen.

In Ausführung der Erfindung kann der Lagerzapfen eine, in Bezug auf eine erste Schnittachse, welche die Rotationsachse des Lagerzapfens orthogonal schneidet, symmetrische asymmetrische Schwächung umfassen. Betrachtet man zum Beispiel die Querschnittsfläche des Lagerzapfens (die Orthogonal zur Rotationsachse) so kann die erste Schnittachse auf (oder parallel) dieser Querschnittsfläche des Lagerzapfens verlaufen. Symmetrisch ist die asymmetrische Schwächung also dann, wenn sie punktsymmetrisch zur ersten Schnittachse gespiegelt ist. Je nach Krafteinwirkung kann die Schwächung selbstverständlich auch eine in Bezug auf die erste Schnittachse asymmetrisch sein, sodass z.B. zwei unterschiedlich grosse Schwächungen auf jeweils einer Seite der ersten Schnittachse vorliegen.

Eine symmetrisch asymmetrische Schwächung ist also eine Schwächung, welche symmetrisch zur ersten Schnittachse und asymmetrisch zur Rotationsachse des Lagerzapfens angeordnet ist.

In der Praxis kann der Lagerzapfen des erfindungsgemässen Lagers eine symmetrische Schwächung umfassen, welche in Bezug auf eine zweite Schnittachse, welche die Symmetrieachse des Lagerzapfens orthogonal schneidet, symmetrisch ist.

Das erfindungsgemässe Lager kann ein Kraftelement umfassen: Dieses Kraftelement kann in der Praxis derart am Lagerzapfen angeordnet sein, dass über das Kraftelement die Kraft in eine vorgebbare Richtung auf den Lagerzapfen ausgeübt werden kann. Hierbei kann das Kraftelement als Kraftstange, Kolbenstange oder Schubstange ausgestaltet sein. Ist das erfindungsgemässe Lager zum Beispiel an einem Motor wie einem Grossdieselmotor verbaut, so kann das Kraftelement unter anderem eine Pleuelstange des Motors sein, wobei das Lager dann am Kreuzkopf oder der Kurbelwelle angeordnet sein kann.

Die asymmetrische Schwächung des Lagerzapfens kann als eine asymmetrische Ausnehmung, insbesondere eine Bohrung ausgestaltet sein. Mit der asymmetrischen Schwächung kann der Lagerzapfen also ein Hohlkörper sein (bei einer Schwächung auf voller Länge des Lagerzapfenkörpers entlang Rotationsachse) oder kann Schwächungen in Form von Hohlräumen umfassen.

Je nach Anwendung des Lagers kann der Lagerzapfen unter anderem ein Kreuzkopfzapfen oder ein Kurbelzapfen sein.

In Ausführung der Erfindung kann die asymmetrische Schwächung des Lagerzapfens in Form einer Änderung der Materialart und/oder Materialdichte und/oder Materialstruktur ausgestaltet sein. An den Stellen, an welchen die asymmetrische Schwächung des Lagerzapfens vorliegt, würde also ein geändertes Material vorliegen. Hierfür kann das Material an dieser Stelle weicher sein, beziehungsweise eine geringere Dichte besitzen oder sich das Material in anderer Weise vom umliegenden Material unterscheiden. Dies bietet sich insbesondere an, wenn der Lagerzapfen als Kompositwerkstoff oder Legierung ausgestaltet ist. An der Stelle der asymmetrischen Schwächung würde der Lagerzapfen dementsprechend eine andere Materialzusammensetzung besitzen. Wäre der Lagerzapfen aus Stahl könnte an der Stelle der asymmetrischen Schwächung des Lagerzapfens also weniger Kohlenstoff, Nickel oder ein ähnliches Additiv, beziehungsweise ein mehr eines anderen Additives umfassen, welche das Material an der entsprechenden Stelle schwächen.

In der Praxis kann der Lagerzapfen auch mehrere asymmetrische Schwächungen in Bezug auf die Rotationsachse umfassen, sodass auch bei komplex einwirkenden Kräften der Lagerzapfen adäquat deformierbar ist. So können zum Beispiel zwei (oder mehrere) gleich grosse asymmetrische Schwächungen vorliegen und die asymmetrischen Schwächungen können auch unterschiedlich gross sein beziehungsweise unterschiedliche geometrische Formen aufweisen. Auch können sich eine oder mehrere asymmetrische Schwächungen auf der vollen Länge des Körpers entlang der Rotationsachse ausdehnen oder als Hohlräume auf nur einem Abschnitt entlang der Länge des Lagerzapfenkörpers entlang Rotationsachse.

In einem erfinungsgemässen Lagers eines Grossdieselmotors können typischerweise Kräfte, insbesondere Lagerkräfte von bis zu ca. 10'000 kN wirken. Der optimale Schmiermitteldruck, insbesondere der hydrodynamische Druck kann hierbei bis zu 600 bar betragen. Die minimale optimale Schmierfilmdicke beträgt hierbei 5 - 30 Mikrometer, insbesondere 5-25 Mikrometer, im speziellen 15-25 Mikrometer.

Selbstverständlich hängen die einwirkende Kraft und der Ölfilmdruck voneinander ab, wobei bzw. die Ölfilmdicke auch von den Dimensionen der Bauteile und der relativen Geschwindigkeit der bewegten Teile abhängt.

Je nach Komplexität der einwirkenden Kräfte kann es notwendig sein komplizierte Schwächungsstrukturen in den erfindungsgemässen Lagerzapfen zu erzeugen. Hierfür kann der Lagerzapfen zweiteilig ausgestaltet sein, indem der Lagerzapfen einen Lagerzapfenring und einen Lagerzapfenkern umfasst. Dabei kann der Lagerzapfenring ein Hohlkörper sein und der Lagerzapfenkern kann mit eingearbeiteten (z.B. eingefrästen) Strukturen im Lagerzapfenring angeordnet sein. Das hat den enormen Vorteil, dass die komplizierten Strukturen einfach in den Lagerzapfenkern eingearbeitet werden können, wobei der Lagerzapfenkern dann einfach in den Lagerzapfenring eingesteckt, eingepresst oder ähnliches werden kann.

Der erfindungsgemässe Lager kann als ein Lager besonders bevorzugt für einen Grossdieselmotor ausgestaltet sein, insbesondere als Lager für einen Kreuzkopf-Grossdieselmotor ausgestaltet sein, wobei der Lagerzapfen dementsprechend ausgestaltet ist.

Erfindungsgemäss wird weiter ein Lagerzapfen für ein erfindungsgemässes Lager vorgeschlagen, wobei der Lagerzapfen derart eine asymmetrische Schwächung umfasst, dass der Lagerzapfen durch eine Kraft nach einem vorgebbarem Schema deformierbar ist, also in Abhängigkeit der Ausgestaltung der asymmetrischen Schwächung und der eigenen Kraft eine entsprechende Deformation des Lagerzapfens folgt.

Erfindungsgemäss wird weiter ein Kreuzkopf mit einem erfindungegemässes Lager umfassend eine Lagerschale und einen Lagerzapfen mit einer Rotationsachse vorgeschlagen, wobei der Lagerzapfen um die Rotationsachse rotierbar in der Lagerschale angeordnet ist. Der Lagerzapfen des erfindungsgemässen Lagers umfasst derart eine asymmetrische Schwächung in Bezug auf die Rotationsachse, dass der Lagerzapfen durch Einwirkung einer in Richtung der Lagerschale wirkenden äusseren Kraft deformierbar ist, sodass beim Einwirken der Kraft auf den Lagerzapfen eine effektive Kraftfläche zwischen der Lagerschale und dem Lagerzapfen über die Deformation des Lagerzapfens vergrössert wird. Der Kreuzkopf kann dabei insbesondere für einen Grossmotor, im speziellen für einen zwei-Takt Grossdieselmotor ausgestaltet sein kann.

Erfindungsgemäss wird weiter ein Grossdieselmotor, insbesonder Kreuzkopf-Grossdieselmotor vorgeschlagen, wobei der Grossdieselmotor ein erfindungsgemässes Lager umfassend eine Lagerschale und einen Lagerzapfen mit einer Rotationsachse umfasst, wobei der Lagerzapfen um die Rotationsachse rotierbar in der Lagerschale angeordnet ist. Der Lagerzapfen des erfindungsgemässen Lagers umfasst derart eine asymmetrische Schwächung in Bezug auf die Rotationsachse, dass der Lagerzapfen durch Einwirkung einer in Richtung der Lagerschale wirkenden äusseren Kraft deformierbar ist, sodass beim Einwirken der Kraft auf den Lagerzapfen eine effektive Kraftfläche zwischen der Lagerschale und dem Lagerzapfen über die Deformation des Lagerzapfens vergrössert wird.

Eine bevorzugte wichtige Ausführungsart soll in diesem Zusammenhang erläutert werden. In einer bevorzugten Ausführungsart ist das erfindungsgemässe Lager in einem Kreuzkopf-Grossdieselmotor im Kreuzkopf angeordnet, wobei der Lagerzapfen ein zylindrischer Lagerzapfen ist, welcher eine asymmetrische Schwächung im Bezug auf die Rotationsachse des Lagerzapfens besitzt, jedoch symmetrisch in Bezug auf erste Schnittachse und somit eine symmetrisch asymmetrische Schwächung ist.

Im Folgenden werden die Erfindung und der Stand der Technik anhand von Ausführungsbeispielen unter Bezugnahme auf die Zeichnungen näher erläutert.

Die Figuren 1 bis 5 zeigen:
- Fig. 1: eine schematische Darstellung des Standes der Technik;
- Fig. 2: eine schematische Darstellung des Querschnitts des erfindungsgemässen Lagers in verschiedenen Ausführungen;
- Fig. 3: eine schematische Darstellung eines Kreuzkopfes;
- Fig. 4: eine schematische Darstellung eines Dieselmotors als ausschnittsweiser Querschnitt;
- Fig. 5: eine schematische Darstellung eines Grossdieselmotors.

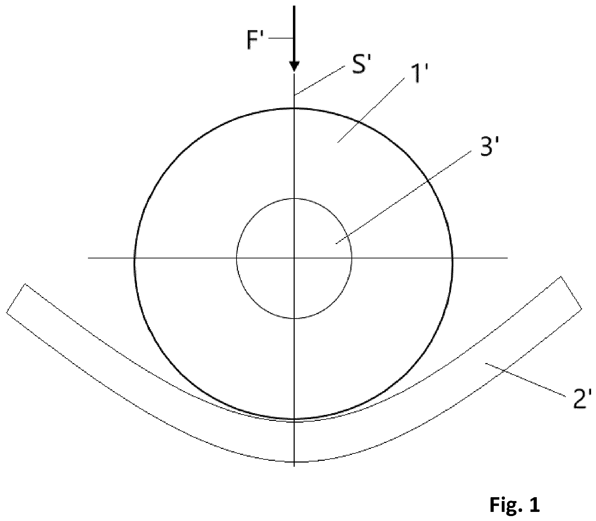

Figur 1 zeigt eine schematische Darstellung des Standes der Technik. Gezeigt ist ein Lager wie im Stand der Technik bereits bekannt. Hierbei umfasst das Lager eine Lagerschale 2' und einen Lagerzapfen 1', welcher in der Lagerschale 2' rotierbar angeordnet ist. Im Schnittpunkt der beiden Schnittlinien S' würde hierbei die Rotationsachse des Lagerzapfens liegen. Im Stand der Technik liegt eine symmetrische Schwächung 3' vor, welche genau im Zentrum des Lagerzapfens und symmetrisch um die Rotationsachse angeordnet ist. Die symmetrische Schwächung 3' ist hierbei eine Aussparung, wodurch eine Art Hohlzylinder vorliegt. Im Stand der Technik wirkt eine Kraft F' auf den Lagerzapfen 1', wodurch diese Kraft vom Lagerzapfen 1' auf die Lagerschale 2' übertragen wird. Die effektive Kraftfläche zwischen Lagerzapfen 1' und Lagerschale 2' ist jedoch sehr klein, da sich eine aus dem Stand der Technik bekannter Lagerzapfen 1' nicht derart deformiert, dass die effektive Kraftfläche zwischen Lagerzapfen 1' und Lagerschale 2' vergrösstert wird, wodurch auch der Druck zwischen Lagerzapfen 1' und Lagerschale 2' verringert werden würde. Die im Stand der Technik bekannte Aussparung 3' dient jedoch lediglich dazu, die Masse des Zapfens zu reduzieren oder Öl zurück zu führen.

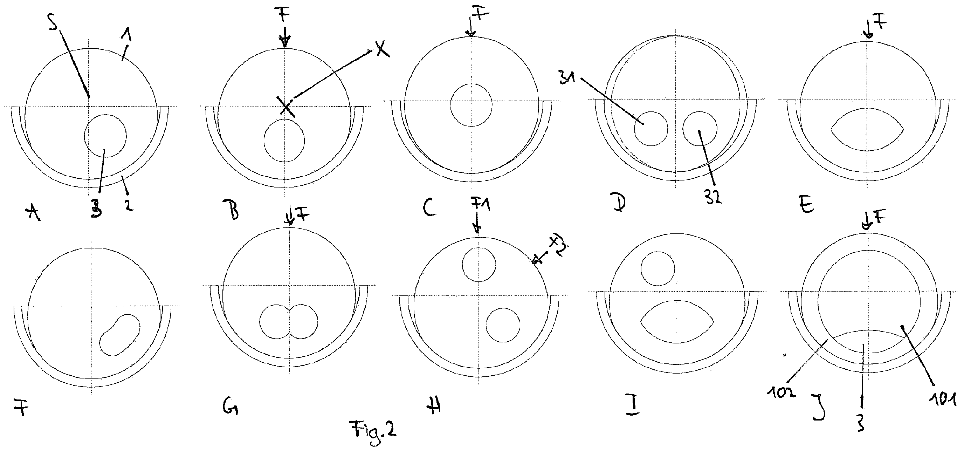

Fig. 2 zeigt eine schematische Darstellung des Querschnitts eines erfindungsgemässen Lagers in verschiedenen Ausführungen. Hierbei umfassen alle der Ausführungen A-J die Lagerschale 2 und den Lagerzapfen 1, wobei der Lagerzapfen 1 als zylindrischer Lagerzapfen ausgestaltet ist. Die Rotationsachse X des Lagerzapfens 1 liegt hierbei im Schnittpunkt der Schnittachsen S. In Fig. 2 A-C, E, F, G und J sind Lagerzapfen mit einer einzelnen asymmetrischen Schwächungen 3 gezeigt, wohingegen in Fig. 2D, H und I Lagerzapfen mit zwei asymmetrischen Schwächungen 31 und 32. Diese asymmertischen Schwächungen 31 und 32 können die gleich oder unterschiedliche Formen aufweisen. Die Lagerzapfen gemäss D, H und I eignen sich besonders wenn zwei verschiedene Kräfte F1 und F2 auf das Lager einwirken, welche gleichzeitig oder abwechselnd wirken können. Lagerzapfen gemäss Fig. 2B, C, D, E, G und J eigenen sich besonders für eine Kraft F welche wie eingezeichnet auf den Lagerzapfen 1 einwirkt, da der Lagerzapfen 1 so bei der unmittelbaren Kontaktfläche von Lagerschale 2 und Lagerzapfen 1 eine asymmetrische Schwächung besitzt, sodass der Lagerzapfen 1 an der unmittelbaren Kontaktfläche zwischen Lagerzapfen 1 und Lagerschale 2 deformiert wird. Fig. 2 J zeigt einen Lagerzapfen, welcher als zweiteiliger Lagerzapfen ausgestaltet ist, und aus einem Lagerzapfenring 102 und einen Lagerzapfenkern 101 zusammengesetzt ist, wobei der Lagerzapfenkern 101 im Lagerzapfenring 101 angeordnet ist. Vergleicht man Fig. 1 mit Fig. 2 so ist leicht zu erkennen, dass bei der erfindungsgemässen Lagervorrichtung die effektive Kraftfläche grösser ist als bei dem Lager des Standes der Technik, wodurch auch die Reibung in den erfindungsgemässen Lagern deutlich geringer ist.

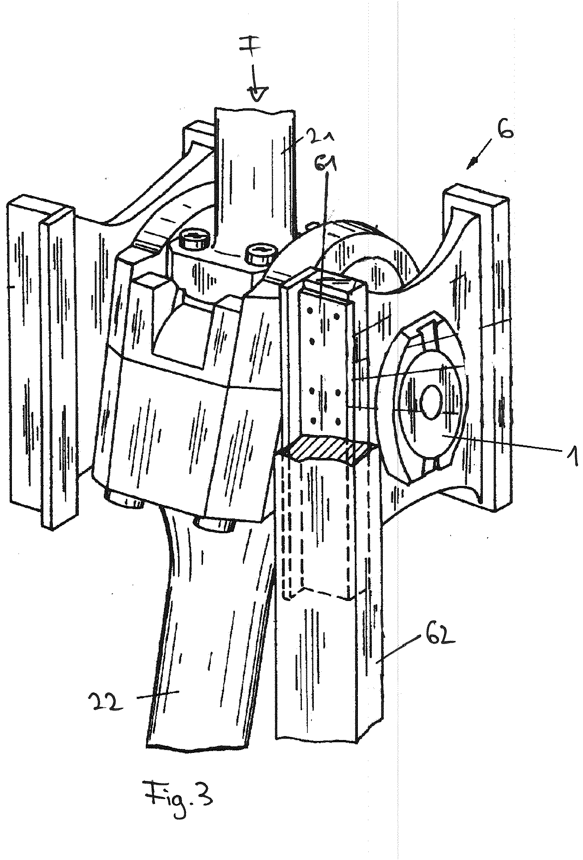

Fig. 3 zeigt eine schematische Darstellung eines Kreuzkopfes. Der Kreuzkopf 6 ist hierbei in Detaildarstellung abgebildet und der Kreuzkopfzapfen 12 ist als erfindungsgemässer Lagerzapfen mit einem erfindungsgemässen Lager ausgestaltet. Vier Kreuzkopf-Gleitschuhe 61 führen den Kreuzkopf 6 und damit die Kolbenstange 21 geradlinig auf Gleitbahnen der Schienen 62 bzw. auf einer Bahn parallel zur Richtung der Schienen 62. Durch die gezeigte Kreuzkopf-Anordnung mit Kreuzkopf-Gleitschuhen 61 wirkt die Kraft F nur aus einer Richtung über die Kolbenstange 21 auf den Kreuzkopfzapfen 12. Hierbei wirkt die Kraft F grösstenteils orthogonal auf den Kreuzkopfzapfen 12. Da die Kraft F nur von oben orthogonal (zur Roationsachse X) aus einer Richtung einwirkt, eignet sich für den Kreuzkopf unter anderem eine asymmetrische Schwächung gemäss Fig. 2B, E oder J, da wenn der Lagerzapfen 1 mit der asymmetrische Schwächung in Richtung der Schubstange 22 ausgerichtet ist, durch Einwirkung der Kraft F der Kreuzkopfzapfen 12 in der Lagerschale deformiert wird, sodass sich die effektive Kraftfläche zwischen Lagerzapfen 1 und Lagerschale vergrössert, sodass die einwirkende Kraft F über eine grössere Fläche im Lager verteilt wird und somit der Druck auf der unmittelbaren Kontaktfläche besser verteilt wird.

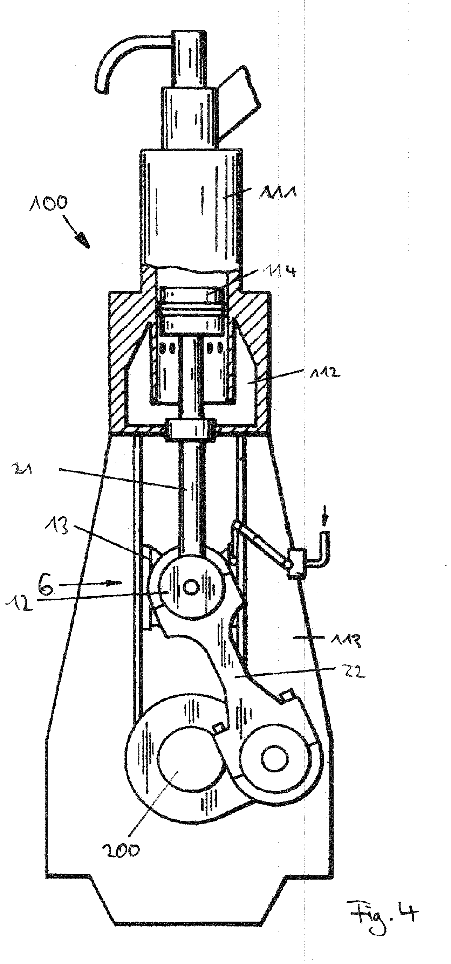

Fig. 4 zeigt eine schematische Darstellung eines Grossmotors 100, insbesondere eines Dieselmotors, im speziellen eines Zwei-Takt-Grossdieselmotors als ausschnittsweiser Querschnitt. Der Grossmotor 100, insbesondere Grossdieselmotor, im speziellen Zwei-Takt- Grossdieselmotor arbeitet nach dem Zweitaktverfahren mit Längsspülung. Er umfasst mehrere Zylinder 111 in einem Zylinderraum 112, der von einem Triebwerksraum 113 getrennt ist. Von einem im Zylinder 111 auf und ab bewegten Kolben 114 erfolgt eine Kraftübertragung, die über eine Kolbenstange 21, einen Kreuzkopfzapfen 12 eines Kreuzkopfes 6, eine Schubstange 22 sowie eine Kurbel und schliesslich auf eine Kurbelwelle 200 des Triebwerks geleitet wird. Der Kreuzkopf 6 wird mittels Führungselementen auf einer geradlinigen Gleitbahn geführt, nämlich mittels Gleitschuhen 61 und Schienen 62. Wie bereits bei Fig. 3 beschrieben ist der Kreuzkopfzapfen 12 als erfindungsgemässer Lagerzapfen mit einem erfindungsgemässen Lager ausgestaltet.

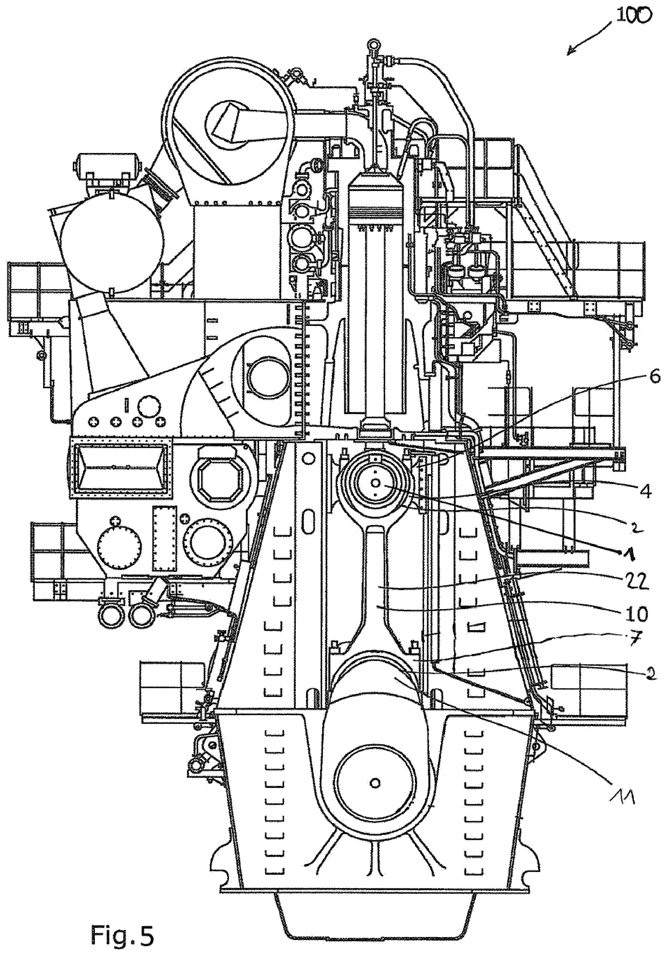

Fig. 5 zeigt eine schematische Darstellung eines Grossmotors 100, insbesondere Grossdieselmotor, im speziellen Zwei-Takt- Grossdieselmotor mit einer Pleuelstange (Schubstange) 22. Die Pleuelstange 22 besteht aus einem ersten Ende 4 mit einer Lagerschale 2 zur Verbindung mit dem Kreuzkopf 6 und einem zweiten Ende 8 mit einer zweiten Bohrung 8 zur Verbindung mit dem Kurbelzapfen 11. Die Pleuelstange 22 besteht weiterhin aus einem Stababschnitt 10 zwischen dem ersten Ende 4 und dem zweiten Ende 7. Bei der Kraftübertragung von einem Bauteil auf ein anderes kann es zu hoher Reibung in den Lagern kommen, da der durch die Kraftübertragung entstehende Druck das Schmiermittel vom Kraftübertragungspunkt wegdrückt, wodurch ein direkter Kontakt zwischen Lagerschalen 2 und den Lagerzapfen 11 und 12 zustande kommt. Insbesondere bei der Kraftübertragung zwischen Pleuelstange 22 und Kurbelzapfen 11 drückt eine große Kraft zwischen Lagerschale 2 und Kurbelzapfen 11. Unter anderem wegen der kontinuierlichen Zufuhr von Schmierstoff ist es wichtig, die Lager zwischen Pleuelstange und Kurbelzapfen / Kreuzkopf zu entlasten. Beim Verteilen des Drucks über eine größere Fläche, durch die Deformation der Lagerzapfen 11 und 12 wird der Druck besser verteilt und somit kann auch die Schmierflüssigkeit leichter in die Lager eingebracht werden. Im vorliegenden Beispiel ist ein erfindungsgemässes Lager mit Lagerschale 2 und asymmetrische Lagerzapfen als Kurbelzapfen 11 und Kreuzkopfzapfen 12 ausgestaltet. Prinzipiell können unter anderem Kurbelzapfen 11 und/oder Kreuzkopfzapfen 12 und somit die respektiven Lager als erfindungsgemässe Lager ausgestaltet sein.

## Patentansprüche

1. Lager umfassend eine Lagerschale (2) und einen Lagerzapfen (1, 11, 12) mit einer Rotationsachse (X), wobei der Lagerzapfen (1, 11, 12) um die Rotationsachse (X) rotierbar in der Lagerschale (2) angeordnet ist,
**dadurch gekennzeichnet, dass**
der Lagerzapfen (1, 11, 12) derart eine asymmetrische Schwächung (3) in Bezug auf die Rotationsachse (X) umfasst, dass der Lagerzapfen (1, 11, 12) durch Einwirkung einer in Richtung der Lagerschale (2) wirkenden äusseren Kraft (F) deformierbar ist, sodass eine effektive Kraftfläche zwischen der Lagerschale (2) und dem Lagerzapfen (1, 11, 12) über die Deformation des Lagerzapfens (1, 11, 12) vergrösserbar ist.

2. Lager nach Anspruch 1, wobei der Lagerzapfen (1, 11, 12) ein zylindrischer Lagerzapfen (1, 11, 12) ist.

3. Lager nach einem der vorangehenden Ansprüche, wobei die Rotationsachse (X) des Lagerzapfens (1, 11, 12) eine Symmetrieachse des Lagerzapfens (1, 11, 12) ist, sodass der Lagerzapfen (1, 11, 12) rotationssymmetrisch rotierbar um die Symmetrieachse in der Lagerschale (2) angeordnet ist.

4. Lager nach einem der vorangehenden Ansprüche, wobei der Lagerzapfen (1, 11, 12) eine, in Bezug auf eine erste Schnittachse (S), welche die Rotationsachse des Lagerzapfens (1, 11, 12) orthogonal schneidet, symmetrische asymmetrische Schwächung umfasst.

5. Lager nach Anspruch 3, wobei der Lagerzapfen eine, in Bezug auf eine zweite Schnittachse, welche die Symmetrieachse des Lagerzapfens orthogonal schneidet, symmetrische asymmetrische Schwächung umfasst.

6. Lager nach einem der vorangehenden Ansprüche, wobei das Lager ein Kraftelement, insbesondere eine Kraftstange, Kolbenstange (21) oder Schubstange (22), umfasst, und das Kraftelement insbesondere derart am Lagerzapfen (1, 11, 12) angeordnet ist, dass über das Kraftelement die Kraft (F) in eine vorgebbare Richtung auf den Lagerzapfen(1, 11, 12) einleitbar ist.

7. Lager nach einem der vorangehenden Ansprüche, wobei die asymmetrische Schwächung (3) des Lagerzapfens (1, 11, 12) eine asymmetrische Ausnehmung, insbesondere eine Bohrung ist.

8. Lager nach einem der vorangehenden Ansprüche, wobei der Lagerzapfen (1, 11, 12) ein Kreuzkopfzapfen (12) oder ein Kurbelzapfen (11) ist.

9. Lager nach einem der vorrangehenden Ansprüche, wobei die asymmetrische Schwächung (3) des Lagerzapfens (1, 11, 12) in Form einer Änderung der Materialart und/oder Materialdichte und/oder Materialstruktur ausgestaltet ist

10. Lager nach einem der vorrangehenden Ansprüche der Lagerzapfen (1, 11, 12) mehrere asymmetrische Schwächungen (3) in Bezug auf die Rotationsachse (X) umfasst.

11. Lager nach einem der vorrangehenden Ansprüche, wobei der Lagerzapfen (1, 11, 12) ein zweiteiliger Lagerzapfen (1, 11, 12) ist, welcher einen Lagerzapfenring (102) und einen Lagerzapfenkern (101) umfasst und der Lagerzapfenkern (101) im Lagerzapfenring (102) angeordnet ist.

12. Lager nach einem der vorrangehenden Ansprüche, wobei der Lagerzapfen (1, 11, 12) als Lagerzapfen (1, 11, 12) für einen Grossdmotor (100) ausgestaltet ist, insbesondere als Lagerzapfen (1, 11, 12) für einen Kreuzkopf-Grossdieselmotor ausgestaltet ist.

13. Lagerzapfen (1, 11, 12) für ein Lager nach einem der Ansprüche 1-12
**dadurch gekennzeichnet, dass**
der Lagerzapfen (1, 11, 12) derart eine asymmetrische Schwächung (3) umfasst, dass der Lagerzapfen (1, 11, 12) durch eine Kraft (F) deformierbar ist.

14. Kreuzkopf, insbesondere für einen Grossmotor, im speziellen für einen zwei-Takt Grossdieselmotor, umfassend ein Lager nach einem der Ansprüche 1-12.

15. Grossmotor, insbesondere Grossdieselmotor, im speziellen Kreuzkopf-Grossdieselmotor, umfassend ein Lager nach einem der Ansprüche 1-12.
